# EUROPEAN PATENT SPECIFICATION

(11) **EP 2 183 311 B1**
(45) Date of publication and mention of the grant of the patent: **03.12.2014**
(21) Application number: 08784169.8
(22) Date of filing: 20.08.2008
(51) Int. Cl.: C08G 18/83, C08J 11/24

(54) **METHOD OF RECYCLING WASTE POLYURETHANE FOAMS**
VERFAHREN ZUR REZYKLIERUNG VON POLYURETHAN-ALTSCHAUMSTOFFEN
PROCÉDÉ DE RECYCLAGE DE DÉCHETS DE MOUSSE DE POLYURÉTHANE

(30) Priority: 23.08.2007 CZ 20070576
(43) Date of publication of application: 12.05.2010
(73) Proprietor: Institute of Macromolecular Chemistry AS CR v.v.i., 162 06 Praha 6 (CZ); Institute Of Chemical Process Fundamentals As Cr, V.V.I., 16502 Praha 6 (CZ)
(72) Inventor: KRULIS, Zdenek, 155 00 Praha 13 (CZ); HORAK, Zdenek, 130 00 Praha 3 (CZ); BENES, Hynek, 198 00 Praha 9 (CZ); HAJEK, Milan, 160 00 Praha 6 (CZ)
(74) Representative: Beetz & Partner
(86) International application number: PCT/CZ2008/000095
(87) International publication number: WO 2009/024102

(56) References cited:
- EP-A2- 0 838 492
- US-A- 3 738 946
- MIR MOHAMMAD ALAVI NIKJE ET AL: "Microwave Assisted Split-phase Glycolysis of Polyurethane Flexible Foam Wastes" POLYMER BULLETIN, SPRINGER, BERLIN, DE, vol. 59, no. 1, 15 March 2007 (2007-03-15), pages 91-104, XP019514958 ISSN: 1436-2449
- "Chemical Recycling and Liquefaction of Rigid Polyurethane Foam Wastes through Microwave Assisted Glycolysis Process" JOURNAL OF MACROMOLECULAR SCIENCE : PART A - CHEMISTRY, MARCEL DEKKER, NEW YORK, NY, US, vol. 44, no. 6, 1 June 2007 (2007-06-01), pages 613-617, XP009111442 ISSN: 0022-233X

## Description

### Technical field

The invention concerns a low-energy method of recycling waste polyurethane foams to a mixture of polyols which can be used for production of new polyurethane foam and compact materials.

### Background art

Polyurethane foams (soft, semisolid, hard, integral et al.) make more than 50 wt. % of total polyurethane production. Considerable production of this material is inseparably connected with the ever-growing amount of polyurethane waste and the necessity of its effective reuse by recycling. Polyurethane foams rank among reactive plastics which can be, by the action of a suitable chemical reagent, decomposed to monomers (oligomers) utilizable for production of new polyurethanes. For polyurethane decomposition, processes based on their hydrolysis, aminolysis, glycololysis or alcoholysis can be used.

Hydrolysis of polyurethanes is based on the use of overheated steam, which hydrolyzes urethane bonds under the formation of polyols and amines (U.S. patents 4,025,559 and 4,339,236). After separation and purification they can be reused as raw materials for polyurethane production. Separation and purification of hydrolytic products of polyurethanes, however, are insofar costly that the process is not economically feasible.

Aminolysis of PURs is based on breaking urethane bonds with amines (e.g. with dibutylamine or ethanolamine) giving rise to polyols and disubstituted ureas. The final products are oligomeric ureas and amines (Kanaya, K., Takahashi, S., J.Appl.Polym.Sci., 51,675, 1994).

The most suitable method, which is currently used in industry, is chemical decomposition of polyurethane network to a polyol mixture by glycololysis utilizing higher-boiling glycols as decomposition reagents (U.S. Patents 3,983,087; 4,044,046; 4,159,972; 5,300,530; 5,357,006; 5,410,008; 5,556,889; 5,635,542; 5,684,054; 5,691,389; 5,763,692; 6,020,386; 6,069,182; 6,683,119; 6,750,260).

A common drawback of all hitherto known polyurethane glycololysis processes is high energy demands and long reaction times, which significantly restricts their utilizability in industry.

It was found experimentally that the glycololysis process can be made considerably more effective by using low-energy microwave radiation for heating of the reaction mixture, which leads to considerable reduction of energy costs of glycololysis and to shorter reaction times. Microwaves are nondestructive non-ionizing radiation of a very low energy (10⁻³ eV, or 1 Jmol⁻¹), which penetrates materials. They cause a very effective internal heating, in which the heat flow from inner parts is directed at the material outside, which causes a high heating rate of the reaction mixture in the bulk notwithstanding its low thermal conductance. The hitherto patented glycololysis processes (U.S. Patents 3,983,087; 4,044,046; 4,159,972; 5,300,530; 5,357,006; 5,410,008; 5,556,889; 5,635,542; 5,684,054; 5,691,389; 5,763,692; 6,020,386; 6,069,182; 6,683,119; 6,750,260) do not mention microwave heating and include only classical heating of the reaction mixture by the action of caloriferous medium (most often silicone oil or overheated steam). The heat flow is here directed from the outer parts of the material inwards, which, due to poor thermal conductance of the processed material, is the cause of considerable energy losses and slowing down of the whole process.

M. M. A. Nikje et al. describe in Polymer Bulletin 59, 91-104 (2007) a microwave assisted glycolysis of waste polyurethane foams. Glycerin, KOH or NaOH were used as glycolysing agent and catalysts, respectively.

In Journal of Macromolecular Science, Part A: Pure and Applied Chemistry (2007), 44, 613-617 a method of recycling waste polyurethane foams is disclosed, using diethylene glycol as glycolysing agent and utilizing microwave irradiation.

### Disclosure of the invention

The experiments proved that the polyurethane foam alone does not absorb microwaves and hence no heating occurs. However, if ethylene glycol is used as reagent, microwaves are absorbed. As a consequence, the reaction mixture of polyurethane foam and glycol warms quickly, polyurethane foam dissolves faster than in classical heating and the network subsequently decomposes to polyols, the recyclate. The microwave heating makes it possible to overheat the reaction mixture and thus to perform the reaction at higher temperature without using pressure, which considerably shortens the overall glycololysis time. This allows the use of glycols with lower boiling points and lower glycol excess for decomposition of polyurethane foam. The recyclate is formed by a mixture of several types of polyols with end hydroxy groups, the predominant component of which is the original aliphatic polyol used for the production of polurethane foam, a carbamate polyol - the derivative of the original isocyanate, most often oligomeric bis(4-isocyanatophenyl)methane (PMD1) - or a mixture of 2,4- and 2,6-diisocyanatotoluene (TDI) and unreacted glycol, which is charged into the reaction mixture. Further it was found out that the thus obtained recyclate can be used, independently or in a mixture with virgin polyols, as a polyol component in the preparation of a new polyurethane, foamed or compact, without influencing negatively the utility properties of the PUR product.

On the basis of the given findings, a low-energy method of recycling of waste polyurethane foams, which utilizes to advantage microwave radiation for heating and decomposition of polyurethane network affording a recyclate (polyols) which can be used in production of new polyurethane products - foamed materials (soft, semisolid and hard foams), cast resins and adhesives. The substance of recycling of waste polyurethane foams to a polyol mixture according to the present invention is that the waste polyurethane is decomposed by the reaction with a low-molecular-weight polyhydric alcohol selected from the group consisting of propylene glycol, 2-methylpropane-1,3-diol, dipropylene glycol, tripropylene glycol, trimethylolpropane (2,2-bis(hydroxymethyl)propan-1-ol), or their mixtures under the condition that the waste polyurethane and polyhydric alcohol in the weight ratio at least 3:1 and at most 1:3 are reacted and the reaction mixture is heated by the action of electromagnetic radiation of a frequency ranging from 1 MHz to 10 GHz to the temperature 50 °C - 300 °C. The recycling of waste polyurethane foams to a mixture of polyols can be preferably performed in such way that the glycololysis is catalyzed by an addition of monoethanolamine, diethanolamine, triethanolamine, sodium or potassium hydroxide, sodium or potassium ethanolate, titanium butoxide, isopropoxide or propoxide or their mixture in any ratio, the catalyst/polyurethane foam weight ratio being 1:500 - 1:10.
The microwave technology of glycololysis of waste polyurethane foams according to the invention is economical as far as the consumed energy is concerned as it saves up to 70 % of electric energy compared with the well-established methods of glycololysis and affords valuable final products, which can be further directly used for polycondensation of polyurethanes or subjected to further easy processing.

### Examples of preparation

### Example 1

100 g of a dust of soft polyurethane foam on the basis of oligomeric 4,4'-diphenylmethane diisocyanate (MDI) and polyether-polyol of bulk density 55 kg/m³ was mixed with dipropylene glycol in the weight ratio 1:1.5 and subsequently heated in a reaction vessel by the action of microwave radiation of input power 1 kW and frequency 2.45 GHz for 10 min. In the course of the time period polyurethane was completely glycololyzed to a mixture of polyols of density 1070 kg/m³, hydroxyl number 476 mg KOH/g, acidity number lower than 0.1 mg KOH/g, and water content 0.8 wt. %. The viscosity of the product at 23 °C was 1850 mPa.s.

For comparison, glycololysis of the same polyurethane foam was performed using classical heating. 100 g of a dust of the same polyurethane foam based on oligomeric MDI and polyether-polyol of bulk density 55 kg/m³ was mixed with diethylene glycol in the weight ratio 1:1 and diethanolamine as a catalyst in the weight ratio to PUR foam 1:100. The mixture was heated in electric heating mantle at 210 °C for 2.5 h. In the course of that time period polyurethane was completely glycololyzed to a mixture of polyols of density 1060 kg/m³, viscosity 2069 mPa.s (at 23 °C), hydroxyl number 372 mg KOH/g, acidity number lower than 0.1 mg KOH/g and water content 0.8 wt. %.

Experimental conditions and results of product analysis are collected in Table 1. It follows from the comparison that the microwave heating of the reaction mixture leads to faster decomposition of polyurethane and lower energy consumption.

### Example 2 (comparative example)

100 g of a dust of soft polyurethane foam on the basis of oligomeric 4,4'-diphenylmethane diisocyanate (MDI) and polyether-polyol of bulk density 55 kg/m³ was mixed with diethylene glycol in the weight ratio 3:1 and diethanolamine as a catalyst in the weight ratio to PUR foam 1:100. The mixture was then heated by microwave radiation of source input 1 kW and frequency 2.45 GHz for 15 min. In the course of that time period polyurethane was completely glycololyzed to a biphase mixture of liquid polyols. The weight ratio of the upper layer to the lower layer of the product was 3:4. The density of the upper layer of the product was 1030 kg/m³, viscosity 6500 mPa.s (at 23 °C), hydroxyl number 181 mg KOH/g, acidity number lower than 0.1 mg KOH/g and water content 0.8 wt. %. The lower layer of the product of density 1090 kg/m³ had the viscosity 550 mPa.s (at 23 °C), hydroxyl number 680 mg KOH/g, acidity number lower than 0.1 mg KOH/g and water content 0.9 wt. %.

For comparison, glycololysis of the same polyurethane foam was performed using classical heating. 100 g of a dust of the same polyurethane foam based on oligomeric_MDI and polyether-polyol of bulk density 55 kg/m³ was mixed with diethylene glycol in the weight ratio 1:1 and diethanolamine as a catalyst in the weight ratio to PUR foam 1:100. The mixture was heated in electric heating mantle at 210 °C for 2.5 h. In the course of that time period polyurethane was completely glycololyzed to a biphase mixture of liquid polyols. The weight ratio of the upper layer to the lower layer of the product was 2:3. The density of the upper phase of the product was 1.03 kg/m³, viscosity at 23 °C 1842 mPa.s, hydroxyl number 218 mg KOH/g, acidity number lower than 0.1 mg KOH/g and water content 0.8 wt. %. The lower layer of the product of density 1.09 kg/m³ had the viscosity 337 mPa.s at 23 °C, hydroxyl number 542 mg KOH/g, acidity number lower than 0.1 mg KOH/g and water content 0.9 wt. %.

Experimental conditions and results of product analysis are collected in Table 1. It follows from the comparison that the microwave heating of the reaction mixture leads to faster decomposition of polyurethane and lower energy consumption.

### Example 3 (comparative example)

100 g of a dust of soft polyurethane foam on the basis of oligomeric 4,4'-diphenylmethane diisocyanate (MDI) and polyether-polyol of bulk density 55 kg/m³ was mixed with ethylene glycol in the weight ratio 1:3 and potassium hydroxide as a catalyst in the weight ratio to PUR foam 1:100. The mixture was then heated by microwave radiation of source input 1 kW and frequency 915 GHz for 8 min. In the course of that time period polyurethane was completely glycololyzed to a biphase liquid mixture of polyols. The weight ratio of the upper layer to lower layer of the product was 1:3. The density of the upper layer of the product was 1030 kg/m³, viscosity amounted to 2570 mPa.s at 23 °C, hydroxyl number was 211 mg KOH/g, acidity number lower than 0.1 mg KOH/g and water content 0.6 wt. %. The lower layer of the product of density 1090 kg/m³, had the viscosity 52 mPa.s at 23 °C, hydroxyl number 1558 mg KOH/g, acidity number lower than 0.1 mg KOH/g and water content 0.9 wt. %.

For comparison, glycololysis of the same polyurethane foam was performed using classical heating. 100 g of a dust of the same polyurethane foam based on oligomeric_MDI and polyether-polyol of bulk density 55 kg/m³ was mixed with ethylene glycol in the weight ratio 1:1 and diethanolamine as a catalyst in the weight ratio to PUR foam 1:100. The mixture was heated in electric heating mantle at 190 °C for 3.5 h. In the course of that time period polyurethane was partially glycololyzed to a biphase mixture of liquid polyols with an unglycololyzed solid fraction of 5 wt. %. The weight ratio of the upper layer to lower layer of the product was 1:5. The density of the upper layer of the product was 1.05 kg/m³, viscosity at 23 °C 2354 mPa.s, hydroxyl number 818 mg KOH/g, acidity number lower than 0.1 mg KOH/g and water content 0.8 wt. %. The lower layer of the product of density 1.09 kg/m³ had the viscosity 878 mPa.s at 23 °C, hydroxyl number 1285 mg KOH/g, acidity number lower than 0.1 mg KOH/g and water content 0.8 wt. %.

Experimental conditions and results of product analysis are collected in Table 1. It follows from the comparison that the microwave heating of the reaction mixture leads to faster decomposition of polyurethane and lower energy consumption.

**Table 1: Reaction conditions and product properties**

| | Example 1 | | Example 2 | | Example 3 | |
|---|---|---|---|---|---|---|
| Heating mode | MW | classic | MW | classic | MW | classic |
| Reagent | dipropylene glycol | dipropylene glycol | diethylene glycol | diethylene glycol | ethylene glycol | ethylene glycol |
| Reaction time | 10 min | 2.5 h | 15 min | 2.5 h | 8 min | 3.5 h |
| PUR foam/glycol, weight ratio | 1:1.5 | 1:1 | 3:1 | 1:1 | 1:3 | 1:1 |
| Unreacted PUR foam, wt. % | 0 | 0 | 0 | 0 | 0 | 6 |
| Viscosity at 23 °C, mPa.s | 1850 | 2069 | 6500* | 1842* | 2570* | 2354* |
| | | | 550** | 337** | 52** | 878** |
| Hydroxyl number, mg KOH/g | 476 | 372 | 181* | 218* | 211* | 818* |
| | | | 680** | 542** | 1558** | 1285** |
| Acidity number, mg KOH/g | <0.1 | <0.1 | <0.1* | <0.1* | <0.1* | <0.1* |
| | | | <0.1** | <0.1** | <0.1** | <0.1* |
| Water content, wt. % | 0.8 | 0.8 | 0.8 | 0.8* | 0.6* | 0.8* |
| | | | 0.9 | 0.9** | 0.9** | 0.8** |

| | | | | | | |
|---|---|---|---|---|---|---|
| * for upper layer ** for lower layer | | | | | | |

### Industrial applicability

The method of recycling of waste polyurethane foams according to the invention can be utilized in production of polyols for processing to polyurethane foams and coating materials.

## Claims

1. The method of recycling of waste polyurethane foams to a polyol mixture **characterized in that** the waste polyurethane is mixed with a low-molecular-weight polyhydric alcohol selected from the group consisting of propylene glycol, 2-methylpropane-1,3-diol, dipropylene glycol, tripropylene glycol, trimethylolpropane or their mixtures under the condition that the waste polyurethane and polyhydric alcohol are in the weight ratio at least 3:1 and at most 1:3 and the reaction mixture is subjected to the action of electromagnetic radiation of a frequency ranging from 1 MHz to 10 GHz at the temperature from 50 °C to 300 °C.

2. The method of recycling of waste polyurethane foams to a polyol mixture according to claim 1 **characterized in that** the occurring glycololysis is catalyzed by addition of monoethanolamine or diethanolamine or triethanolamine or titanium butoxide or titanium isopropoxide or titanium n-propoxide or their mixture in any ratio, the catalyst/ polyurethane weight ratio being from 1:500 to 1:10.

## Patentansprüche

1. Verfahren für die Aufbereitung von Polyurethanschaumabfällen zu einem Polyolgemisch, **dadurch gekennzeichnet, dass** das Polyurethanabfallprodukt mit einem niedermolekularen mehrwertigen Alkohol vermischt wird, der unter Propylenglycol, 2-Methyl-propan-1,3-diol, Dipropylenglycol, Tripropylenglycol, Trimethylolpropan oder deren Gemischen ausgewählt ist, mit der Maßgabe, dass das Polyurethanabfallprodukt und der mehrwertige Alkohol in einem Gewichtsverhältnis von mindestens 3:1 und höchstens 1:3 vorliegen und das Reaktionsgemisch einer elektromagnetischen Strahlung mit einer Frequenz von 1 MHz bis 10 GHz bei einer Temperatur von 50°C bis 300°C ausgesetzt wird.

2. Verfahren für die Aufbereitung von Polyurethanschaumabfällen zu einem Polyolgemisch nach Anspruch 1, **dadurch gekennzeichnet, dass** die ablaufende Glycolyse durch Zusatz von Monoethanolamin oder Diethanolamin oder Triethanolamin oder Titanbutoxid oder Titanisopropoxid oder Titanin-n-propoxid oder deren Gemischen in beliebigen Verhältnissen katalysiert wird, wobei das Gewichtsverhältnis Katalysator/Polyurethan im Bereich von 1:500 bis 1:10 liegt.

## Revendications

1. Procédé de recyclage de déchets de mousses de ρoly(uréthane) en un mélange de polyols **caractérisé en ce que** les déchets de poly(uréthane) sont mélangés avec un alcool polyhydrique de faible masse moléculaire choisi dans le groupe consistant en le propylène glycol, le 2-méthylpropane-1,3-diol, le dipropylène glycol, le tripropylène glycol, le triméthylolpropane ou leurs mélanges à condition que les déchets de poly(uréthane) et l'alcool polyhydrique soient dans un rapport en poids d'au moins 3 : 1 et d'au plus 1 : 3 et que le mélange de réaction soit soumis à l'action d'un rayonnement électromagnétique d'une fréquence allant de 1 MHz à 10 GHz à la température de 50 à 300 °C.

2. Procédé de recyclage de déchets de mousses de poly(uréthane) en un mélange de polyol selon la revendication 1, **caractérisé en ce que** la lyse de glycol ayant lieu est catalysée par addition de monoéthanolamine ou de diéthanolamine ou de triéthanolamine ou de butoxyde de titane ou d'isopropoxyde de titane ou de n-propoxyde de titane ou leur mélange dans un rapport quelconque, le rapport en poids catalyse/poly(uréthane) étant de 1 : 500 à 1 : 10.
